Europäisches Patentamt

European Patent Office

Office européen des brevets

(19)

(11) Publication number: **0 383 765 B1**

# EUROPEAN PATENT SPECIFICATION

(12)

(45) Date of publication of patent specification: **23.12.92**

(51) Int. Cl.5: **B63B 17/00**, C02F 3/00

(21) Application number: **88904987.0**

(22) Date of filing: **02.06.88**

(86) International application number:
**PCT/GB88/00434**

(87) International publication number:
**WO 88/09740 (15.12.88 88/27)**

(54) SEWAGE TREATMENT PLANT.

(30) Priority: **05.06.87 GB 8713211**

(43) Date of publication of application:
**29.08.90 Bulletin 90/35**

(45) Publication of the grant of the patent:
**23.12.92 Bulletin 92/52**

(84) Designated Contracting States:
**AT BE CH DE FR GB IT LI LU NL SE**

(56) References cited:
**DE-A- 3 145 797**
**FR-A-24 544 28**
**US-A-40 091 04**

**Shipping World & Shipbuilder, vol. 165, no. 873, September 1972 London (GB) B. Storch et al.: "Sewage disposal" pages 1073, 1074, 1093**

(73) Proprietor: **THE SECRETARY OF STATE FOR DEFENCE IN HER BRITANNIC MAJESTY'S GOVERNMENT OF THE UNITED KINGDOM OF GREAT BRITAIN AND NORTHERN IRELAND, Whitehall London WC1A 2HB(GB)**

(72) Inventor: **LIDGITT, Peter, John**
**The Lodge Wingfield Nr. Trowbridge**
**Wiltshire BA14 9LE(GB)**
Inventor: **FREEMAN, Derek, Jeremy**
**42 Blind Lane Southwick**
**Trowbridge Wiltshire(GB)**
Inventor: **COOPER, Paul, Frederick**
**WRC Process Elder Way**
**Stevenage Hertfordshire SG1 1TH(GB)**

(74) Representative: **Beckham, Robert William et al Defence Research Agency Intellectual Property Department DRA Farnborough Farnborough, Hants. GU14 6TD(GB)**

EP 0 383 765 B1

**Journal Water Pollution Control Federation, vol. 59, no. 2, February 1987 Alexandria, VA, (US) H. Melcer et al.: "Conversion of small municipal wastewater treatment plants to sequencing batch reactors" Pages 79-85**

## Description

The invention relates to the treatment of sewage and in particular, though not exclusively, to sewage treament for use on a mobile platform such as a ship.

Disposal of sewage from ships alongside or in coastal waters is a considerable current problem. Some harbours have sewage collection facilities, however, these are not always available. Thus sewage collection and treatment plant is required where port facilities are unavailable. Such plant is desirably highly efficient such that a small plant will allow a ship to remain along side for a long period. Currently there are three types of sewage treatment plant in common use. These are:

 a) Collect, hold and transfer (CHT) with either gravity or vacuum collection systems.
 b) Solid separation treatment plant (SSTPS).
 c) Biological sewage treatment plants (BSTPS).

## Biological Sewage Treatment Plants

Theoretically, this type of plant should allow ships to operate for long periods without the need for shore reception facilities. Modern BSTPS plants use the "activated sludge" process, which involves blowing air through the sewage. A development of the activated sludge process is known as the extended aeration system and is described in "Shipping World and Shipbuilder" September 1972 in an article "Sewage Disposal" by B Storch, on page 1074. In this sewage directly enters an aeration tank in which activated sludge is generated. The tank contains about 1 day's flow of toilet water and galley wastes and uses the ship's air supply. Liquid from aeration passes into a settlement tank for separation of the biologically treated water from the activated sludge. The biologically treated water is removed and the remaining sludge is returned to the aeration tank for further aeration. The biologically treated water is collected in a sump, at which stage waste, or grey water (grey water being waste water which is not classified as sewage, such as shower and washing water) is usually added. Overboard discharges from the sump may be sterilised, for example by the addition of chlorine tablets to the collecting sump.

In practice BSPTS systems have frequently not operated satisfactorily for the following reasons:

 a) The process depends upon effective reduction of the sewage by bacteria in the main aeration tank. This process is very sensitive to:
   (1) Changes in the salinity of the flush water.
   (2) High hydraulic loads caused by defective toilet flushing valves or leaking tank cleaning spray cross connection valves.
   (3) Variations in the load cycle imposed by the operating pattern of the ship. Low loads are particularly detrimental as the bacterial population necessary for aerobic digestion of the sewage cannot be sustained.
   (4) Excessive use of detergents and cleaning agents which destroy the bacterial population.
 b) Being continuous flow processes there is no control over the residence time in each tank. This can result in incomplete processing of the sewage and carry over of solids.
 c) Ship motions affect the settling process.

## Solid Separation Treatment p]ants

This type ofplant has the advantage that it is available on demand and can be shut down when the ship is outside controlled waters. However, these plants have not been entirely satisfactory in service for the following reasons:

 a) The level of biological activity of the discharge does not meet the standard expected to be set by international regulations.
 b) The filters have proved to be particularly troublesome. They block frequently and require considerable and unpleasant maintenance.
 c) The plants have a relatively short holding time of only 5-7 days.
 d) The plants use a lot of disinfectant (15lbs/day).

## Col]ect, Hold and Transfer Systems

The majority of these fitted in the Royal Navy are of the gravity collect type and are fitted to smaller ships. Gravity collection reduces the plant size since flush water is minimised.

The main problem with CHT systems is their limited hold time of 5-7 days. This in turn leads to the requirement for costly sewage reception facilities in the Naval Bases and can lead to problems when ships visit or operate in clean areas.

The object of the present invention is toprovide an improved sewage treatment plant, capable of operation on a mobile platform and of use for longer periods than currently available plant.

According to the present invention an aerobic sewage system includes a sewage collection tank, a settlement tank, an aeration tank and aeration means for aerating sewage, characterised in having means for controllably transferring batches of sewage from the collection tank to the settlement tank, means for transferring sludge from the settlement tank to a sludge tank, means for controllably transferring batches of liquid sewage from the settlement tank to the aeration tank, and means for transferring sludge from the aeration tank to the sludge tank, the aeration means supplying both the aeration tank and the sludge tank.

The sewage is preferably collected in the collection tank by means of a fresh water flush vacuum system, and each batch of sewage being transferred from the separating tank to the aeration tank is preferrably diluted with grey water, a typical dilution ratio being 15 parts of water to 1 of sewage.

The means for transferring sludge from the aeration tank to the sludge storage tank can be controlled by a suspended solids density probe in the aeration tank, and the temperature in the sludge storage tank is preferrably controlled by a heater and a thermometer. A liquid spray can be provided in the sludge storage tank, operation of which inhibits the build up of foam above the sludge, and a discharge means is connected to the sludge storage tank whereby inert sludge is discharged therefrom.

The aeration tank is preferably provided with monitoring and controlling means to maintain liquid level, temperature and dissolved oxygen content of the sewage within predetermined limits, and with means for controllably transferring batches of fluid from the aeration tank to a chlorination tank.

According to another aspect of the invention, a method of treating sewage by aeration includes the steps of transferring sewage from a sewage collection tank to an aeration tank, characterised in that fixed volume batches of sewage are transferred from the sewage collection tank to a settlement tank at regular intervals, that sludge from the settlement tank is passed to a sludge storage tank, that fixed volume batches of liquid sewage are transferred from the settlement tank to the aeration tank at regular intervals, and that sludge forming in the aeration tank is transferred to the sludge storage tank when the density of the sludge reaches a predetermined value.

The treated liquid can subsequently be passed from the aeration tank to a chlorination tank via a separator which passes separated solids back to the aeration tank.

The sludge storage tank can advantageously include aerating means.

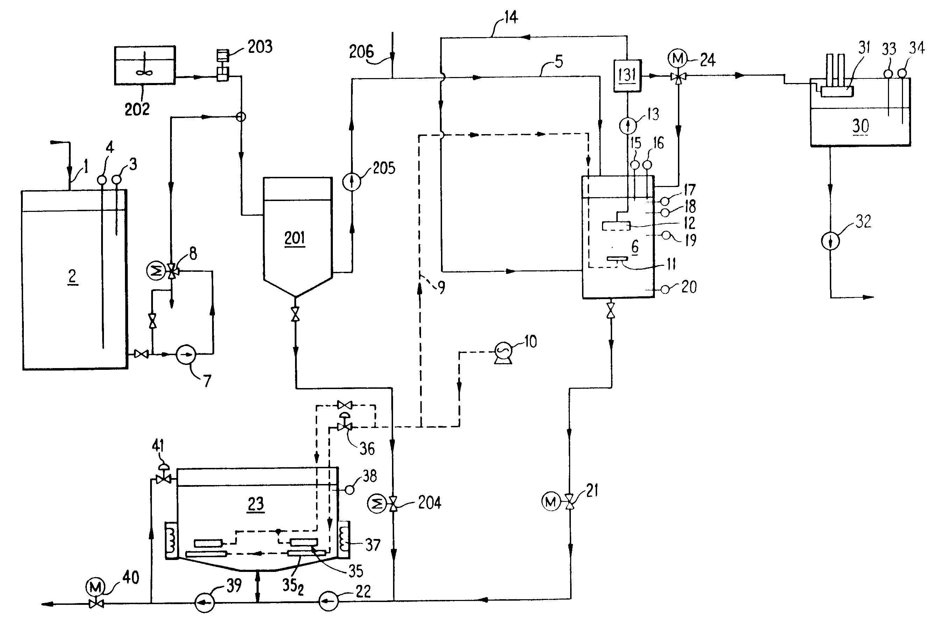

In a marine sewage treatment plant as shown in the Figure, sewage collected under vacuum is delivered via a conduit 1 to a 2000 litre sewage reception tank 2, a capacity equivalent to about twice the expected daily sewage collection for a hundred man plant. Fresh water is used for flushing. Vacuum collection requires much less volume of flush water and so leads to a more compact treatment plant than using conventional flush arrangements. Two level probes 3 and 4 in the sewage reception tank 2 define the upper and lower limits for storage of sewage.

Six hourly batches of sewage (250litres) from the reception tank 2 are first passed via a pump and macerator 7 and a motorised valve 8 to a settlment tank 201 where they are mixed with quantities of settling agent from a polyelectrolyte tank 202 by a pump dispenser 203. Sludge from the settlement tank 201 is transferred through valve 204, together with the sludge from an aeration tank 6, to a sludge storage tank 23. At six hourly intervals liquid remaining (200 litres) in the settlement tank 201 is transferred via line 5 by pump 205 to the 10,000 litres aeration tank 6. Thus bulk solids are removed from the settlement tank 201 prior to aeration treatment. The sewage effluent to be treated in the aeration tank is diluted with grey water in the ratio 15 parts of water to 1 part of sewage in order to optimise the biological process. Grey water is waste water which is not classified as sewage from eg showers, washing and the ship's galley. The grey water is connected to the sewage line 5 via a conduit 206. Every six hours a 250 litre batch is pumped along the line 5 to the aeration tank 6.

Conditions in the aeration tank 6 are critical and these are monitored by various probes 15-20 which measure temperature (15), dissolved oxygen(16), liquid levels (17-19) and suspended solids (20). When thelevel of suspended solids reaches a critical value, sludge is automatically withdrawn through valve 21 from the base of the aeration tank 6 by a pump 22 to an aerobic sludge digestion/storage tank 23. The sewage is aerated by air provided to fine bubble aerators 11 via air line 9 from a blower 10.

After an initial period 200 litre batches of well aerated liquid are withdrawn hourly from the aeration tank 6 through a suction head 12 by a pump 13 through the separation system 131 and a valve 24 to a chlorination tank 30. The separation system 131 comprises a centrifuge separator although tilted plate separators or an air floatation separator may be used. Between batches the flow from the separation system 131 is diverted by valve 24 back to the aeration tank. Solids are returned from the separation system 131 via line 14 to the aeration tank 6. The aerated liquid batches are transferred tothe chlorination tank 30 through a chlorination unit 31. The liquid remains in the chlorination tank 30 for four hours to ensure complete chlorination before it is discharged in 200 litre batches from the ship by means of a pump 32. The liquid level in the chlorination tank 30 is monitored by level probes 33 and 34.

Sludge which is transferred to the sludge storage tank 23 is aerated by aerators 35 (35 and $35_2$) connected via valve 36 to the blower 10. The aerators $35_2$ are fine bubble aerators. The sludge is kept at a controlled temperature by means of a heater37 and temperature probe 38. In order to prevent build-up of foam within the sludge tank 23 a fine spray of liquid is injected via valve 41 into the top of the sludge tank 23 at predetermined times. After 20 days of storage treatment there remains an inert bulk of material in the sludge tank 23. The 20 days storage defines the maximum endurance of the ship's sewage treatment plant after which the inert sludge is discharged from the sludge tank via pump 39 and valve 40.

In the present invention by keeping the density of suspended solids in the aeration tank 6 to a predetemined maximum filtering of the liquid after carbonaceous oxidation/nitrification processing is optimised.

**Claims**

1. An aerobic sewage system including a sewage collection tank (2), a settlement tank (201), an aeration tank (6) and aeration means (10, 11, 36, 35, $35_2$) for aerating sewage , characterised in having means (7, 8) for controllably transferring batches of sewage from the collection tank (2) to the settlement tank (201), means (204) for transferring sludge from the settlement tank (201) to a sludge tank( 23), means (5, 205) for controllably transferring batches of liquid sewage from the settlement tank (201) to the aeration tank (6), and means (21) for transferring sludge from the aeration tank (6) to the sludge tank (23), the aeration means (10, 11, 36, 35 $35_2$) supplying both the aeration tank (6) and the sludge tank (23).

2. A sewage system as claimed in claim characterised in including a fresh water flush vacuum system to collect sewage in the collection tank.

3. A sewage system as claimed in claim 1 or 2 characterised in having means (206) for diluting each batch of sewage being transferred from the separating tank (201) to the aeration tank (6) with grey water.

4. A sewage treatment plant as claimed in claim 3 characterised in that the sewage is diluted in the ratio of 15:1.

5. A sewage system as claimed in any one preceding claim characterised in that the means (21) for transferring sludge from the aeration tank (6) to the sludge storage tank (23) is controlled by a suspended solids density probe (20) in the aeration tank (6).

6. A sewage system as claimed in any one of Claims 1 to 5 characterised in that temperature in the sludge storage tank (23) is controlled by a heater (37) and a thermometer (38).

7. A sewage treatment plant as claimed in any one of Claims 1to 6 characterised in that the sludge storage tank (23) is provided with a liquid spray (41), operation of which inhibits the build up of foam above the sludge.

8. A sewage system as claimed in anyone of claims 5 to 7 characterised in that a discharge means (40) is connected to the sludge storage tank (23) whereby inert sludge is discharged therefrom.

9. A sewage system as claimed in any one preceding claim characterised in that the aeration tank (6)is provided with monitoring and controlling means (15, 16, 17, 18 19) to maintain liquid level, temperature and dissolved oxygen content of the sewage within predetermined limits.

10. A sewage system as claimed in any one preceding claim characterised in having means (13, 131, 24) for controllably transferring batches of fluid from the aeration tank (6) to a chlorination tank (30).

11. A sewage system as claimed in claim 10 wherein characterised in that the means (13, 131, 24) includes a separator (131) and means (14) for returning solids from the separator (131) to the aeration tank (6).

12. A method of treating sewage by aeration including the steps of transferring sewage from a sewage collection tank (2) to an aeration tank (6) characterised in that fixed volume batches of sewage are transferred from the sewage collection tank (2) to a settlement tank (201) at regular intervals, that sludge from the settlement tank (201) is passed to a sludge storage tank (23), that fixed volume batches of liquid sewage are transferred from the settlement tank (201) to the aeration tank (6) at regular intervals, and that sludge forming in the aeration tank (6) is transferred to the sludge storage tank when the density of the sludge reaches a predetermined value.

13. A method of treating sewage as claimed in Claim 12 characterised in that treated liquid is passed from the aeration tank (6) to a chlorination tank (30) via a separator (131) which passes separated solids back to the aeration tank (6).

14. A method of treating sewage as claimed in Claim 12 or in Claim 13 characterised in that the sludge storage tank (23) includes aerating

means (35, 35$_2$).

## Patentansprüche

1. Aerobes Abwassersystem mit einem Abwassersammeltank (2), einem Absetztank (201), einem Belüftungstank (6) und einer Belüftungseinrichtung (10, 11, 36, 35, 35$_2$) zum Belüften des Abwassers,
   **dadurch gekennzeichnet,**
   daß es eine Einrichtung (7, 8) zum regelbaren Transport von Chargen von Abwasser vom Sammeltank (2) zum Absetztank (201), eine Einrichtung (204) zum Transport von Abschlamm vom Absetztank (201) zu einem Abschlammtank (23), eine Einrichtung (5, 205) zum regelbaren Transport von Chargen flüssiger Abfallstoffe vom Absetztank (201) zum Belüftungstank (6), und eine Einrichtung (21) zum Transport von Abschlamm vom Belüftungstank (6) zum Abschlammtank (23), wobei die Belüftungseinrichtung (10, 11, 36, 35, 35$_2$) sowohl den Belüftungstank (6) als auch den Abschlammtank (23) beliefert.

2. Abwassersystem gemäß Anspruch 1, dadurch gekennzeichnet, daß es zum Sammeln des Abwassers im Sammeltank ein Vakuumsystem für eine Frischwasserspülung enthält.

3. Abwassersystem gemäß Anspruch 1 oder 2, dadurch gekennzeichnet, daß es eine Einrichtung (206) zum Verdünnen jeder Abwassercharge mit Brauchwasser enthält, die vom Trenntank (201) zum Belüftungstank (6) geleitet wird.

4. Abwasserbehandlungsanlage gemäß Anspruch 3, dadurch gekennzeichnet, daß das Abwasser im Verhältnis 15:1 verdünnt wird.

5. Abwassersystem gemäß einem der vorhergehenden Ansprüche, dadurch gekennzeichnet, daß die Einrichtung (21) zum Transport des Abschlamms vom Belüftungstank (6) zum Abschlammspeichertank (23) durch einen Sensor (20) der Dichte der im Belüftungstank (6) schwebenden Feststoffe geregelt wird.

6. Abwassersystem gemäß einem der Ansprüche 1 bis 5, dadurch gekennzeichnet, daß die Temperatur im Abschlammspeichertank (23) durch ein Heizelement (37) und ein Thermometer (38) geregelt wird.

7. Abwasserbehandlungsanlage gemäß einem der Ansprüche 1 bis 6, dadurch gekennzeichnet, daß im Abschlammspeichertank (23) ein Flüssigspray (41) vorgesehen ist, durch dessen Betrieb eine Schaumbildung über dem Abschlamm verhindert wird.

8. Abwassersystem gemäß einem der Ansprüche 5 bis 7, dadurch gekennzeichnet, daß eine Auslaßeinrichtung (40) mit dem Abschlammspeichertank (23) verbunden ist, durch die aus diesem inaktiver Abschlamm abgelassen wird.

9. Abwassersystem gemäß einem der vorhergehenden Ansprüche, dadurch gekennzeichnet, daß der Belüftungstank (6) zur Aufrechterhaltung des Flüssigkeitspegels, der Temperatur und des Gehalts an gelöstem Sauerstoff im Abwasser innerhalb vorgegebener Grenzwerte mit einer Überwachungs- und Regeleinrichtung (15, 16, 17, 18, 19) ausgestattet ist.

10. Abwassersystem gemäß einem der vorhergehenden Ansprüche, dadurch gekennzeichnet, daß eine Einrichtung (13, 131, 24) zum regelbaren Transport von Flüssigkeitschargen vom Belüftungstank (6) zu einem Chlorierungstank (30) vorgesehen ist.

11. Abwassersystem gemäß Anspruch 10, dadurch gekennzeichnet, daß eine Einrichtung (13, 131, 24) einen Separator (131) und eine Einrichtung (14) zur Rückführung von Feststoffen aus dem Separator (131) in den Belüftungstank (6) enthält.

12. Verfahren zur Behandlung von Abwasser durch Belüftung mit den Schritten: Transport des Abwassers vom Abwassersammeltank (2) zu einem Belüftungstank (6), dadurch gekennzeichnet, daß in regelmäßigen Abständen gleichbleibende Chargen Abwasser vom Abwassersammeltank (2) zu einem Absetztank (201) transportiert werden, daß Abschlamm vom Absetztank (201) zu einem Abschlammspeichertank (23) geleitet wird, daß in regelmäßigen Abständen gleichbleibende Chargen Flüssigabfall vom Absetztank (201) zum Belüftungstank (6) transportiert werden, und daß der sich im Belüftungstank (6) bildende Abschlamm zum Abschlammspeichertank (23) geleitet wird, wenn die Dichte des Abschlamms einen vorgegebenen Wert erreicht.

13. Verfahren zur Behandlung von Abwasser gemäß Anspruch 12, dadurch gekennzeichnet, daß die behandelte Flüssigkeit vom Belüftungstank (6) über einen Separator (131), der die getrennten Feststoffe zum Belüftungstank (6) zurücktransportiert, zu einem Chlorierungstank (30) geleitet wird.

14. Verfahren zur Behandlung von Abwasser gemäß Anspruch 12 oder 13, dadurch gekennzeichnet, daß der Abschlammspeichertank (23) eine Belüftungseinrichtung (35, 35$_2$) aufweist.

## Revendications

1. Système ou installation de traitement aérobie d'eaux usées, comprenant un réservoir (2) de collecte des eaux usées, un réservoir (201) de sédimentation, une cuve (6) d'aération et des moyens (10, 11, 36, 35, 35$_2$) d'aération pour aérer l'eau usée, installation caractérisée en ce qu'elle comporte des moyens (7, 8) pour transférer de manière réglable des lots d'eau usée du réservoir (2) de collecte vers le réservoir (201) de sédimentation, un moyen (204) pour transférer la boue du réservoir (201) de sédimentation vers un réservoir (23) de boue, des moyens (5, 205) pour transférer de manière réglable des lots d'eau usée liquide du réservoir (201) de sédimentation vers la cuve (6) d'aération, et un moyen (21) pour transférer la boue de la cuve (6) d'aération vers le réservoir (23) de boue, les moyens ou organes (10, 11, 36, 35, 35$_2$) d'aération alimentant à la fois la cuve (6) d'aération et le réservoir (23) de boue.

2. Installation de traitement d'eaux usées, telle que revendiquée à la revendication 1, caractérisée en ce qu'elle comprend un système de balayage par de l'eau fraîche sous vide pour assurer la collecte de l'eau usée dans le réservoir de collecte.

3. Installation de traitement d'eaux usées selon la revendication 1 ou 2, caractérisée en ce qu'elle comporte un moyen (206) pour diluer avec de l'eau grise chaque lot d'eau usée transféré du réservoir (201) de séparation à la cuve (6) d'aération.

4. Installation de traitement d'eaux usées, telle que revendiquée à la revendication 3, caractérisée en ce que l'eau usée est diluée selon un rapport de 15:1.

5. Installation de traitement d'eaux usées, telle que revendiquée dans l'une quelconque des revendications précédentes, caractérisée en ce que le moyen (21) pour transférer la boue de la cuve (6) d'aération au réservoir (23) de stockage de boue est commandé par une sonde (20) indiquant la densité des solides en suspension dans le réservoir (6) d'aération.

6. Installation de traitement d'eaux usées, telle que revendiquée dans l'une quelconque des revendications 1 à 5, caractérisée en ce que la température régnant dans le réservoir (23) de stockage de boue est commandée par un dispositif de chauffage (37) et un thermomètre (38).

7. Installation de traitement d'eaux usées, telle que revendiquée dans l'une quelconque des revendications 1 à 6, caractérisée en ce que le réservoir (23) de stockage de la boue est équipé d'un organe (41) de projection d'un liquide pulvérisé, dont le fonctionnement inhibe la formation de mousse au-dessus de la boue.

8. Installation de traitement d'eaux usées telle que revendiquée dans l'une quelconque des revendications 5 à 7, caractérisée en ce qu'un organe de décharge (40) est connecté au réservoir (23) de stockage de boue, ce qui permet d'en décharger la boue inerte.

9. Installation de traitement d'eaux usées telle que revendiquée dans l'une quelconque des revendications précédentes, caractérisée en ce que la cuve (6) d'aération est équipée d'organes (15, 16, 17, 18, 19) de surveillance et de commande, destinés à maintenir entre des limites prédéterminées le niveau du liquide, la température du liquide et la teneur en oxygène dissous de l'eau usée.

10. Installation de traitement d'eaux usées, telle que revendiquée dans l'une quelconque des revendications précédentes, caractérisée en ce qu'elle comporte des organes (13, 131, 24) destinés à transférer de manière réglable des lots de fluide de la cuve (6) d'aération vers un réservoir (30) de chloration.

11. Installation de traitement d'eaux usées, telle que revendiquée à la revendication 10, caractérisée en ce que l'organe (13, 131, 24) ou dispositif comprend un séparateur (131) et un moyen (14) pour renvoyer les solides du séparateur (131) vers la cuve (6) d'aération.

12. Procédé pour traiter de l'eau usée, par aération, ce procédé comprenant les étapes consistant à transférer l'eau usée d'un réservoir (2) de collecte d'eau usée vers une cuve (6) d'aération, procédé caractérisé en ce qu'on transfère à des intervalles réguliers des lots d'un volume fixé d'eau usée du réservoir (2) d'eau usée vers un réservoir (201) de sédimentation ; en ce qu'on fait passer la boue du réservoir (201) de sédimentation vers un réservoir (23) de stockage de la boue ; en ce qu'on transfère à des intervalles réguliers des lots d'un volume fixé de liquide usagé du réservoir (201) de sédimentation vers la cuve (6) d'aération ; et en ce qu'on transfère la boue qui se forme dans la cuve (6) d'aération vers le réservoir de stockage de boue lorsque la densité de la boue atteint une valeur prédéterminée.

13. Procédé pour traiter de l'eau usée, tel que revendiqué à la revendication 12, caractérisé en ce qu'on fait passer le liquide traité de la cuve (6) d'aération vers un réservoir (30) de chloration, par l'intermédiaire d'un séparateur (131) qui renvoie vers la cuve (6) d'aération les solides séparés.

14. Procédé pour traiter de l'eau usée, tel que revendiqué à la revendication 12 ou à la revendication 13, caractérisé en ce que le réservoir (23) de stockage de la boue comprend des organes (35, $35_2$) d'aération.

EP 0 383 765 B1